Europäisches Patentamt

(19) European Patent Office

Office européen des brevets

(11) Publication number: **0 201 859**
**B1**

## (12) EUROPEAN PATENT SPECIFICATION

(45) Date of publication of the patent specification:
**17.01.90**

(21) Application number: **86106235.4**

(22) Date of filing: **07.05.86**

(51) Int. Cl.⁴: **G21C 3/32**

(54) **Fuel bundle for use in a nuclear reactor.**

(30) Priority: **08.05.85 US 732032**

(43) Date of publication of application:
**20.11.86 Bulletin 86/47**

(45) Publication of the grant of the patent:
**17.01.90 Bulletin 90/3**

(84) Designated Contracting States:
**CH DE IT LI SE**

(56) References cited:
**EP-A- 0 073 728**
**DE-A- 3 322 065**
**FR-A- 2 058 306**
**FR-A- 2 154 753**

(73) Proprietor: **WESTINGHOUSE ELECTRIC
CORPORATION, Westinghouse Building Gateway
Center, Pittsburgh Pennsylvania 15222(US)**

(72) Inventor: **Lui, Chun Kee, 1347 Foxboro Drive, Monroeville
Pennsylvania 15146(US)**

(74) Representative: **Patentanwälte Dipl.-Ing. R. Holzer
Dipl.-Ing. (FH) W. Gallo, Ludwigstrasse 26,
D-8900 Augsburg(DE)**

ACTORUM AG

## Description

This invention relates to a fuel bundle for use in a nuclear reactor, as defined in the precharacterising portion of claim 1, and disclosed in EP-A 0 073 728.

A fuel bundle typically includes a top plate and a bottom plate between which there are mounted fuel rods held together by axially spaced straps or spacers. In accordance with teachings of the prior art, each bundle is provided with tie rods which are screwed into, or bolted to, the bottom plate, and it has spacer-capture rods which are secured to the bottom plate by pins to suppress rotation about their longitudinal axes and which have axially spaced tabs to prevent axial displacement of the spacers.

Removal of the tie rods during reconstitution, particularly complete reconstruction, of a fuel bundle presents formidable difficulties because it demands access to the bottom plate, usually in a radioactive environment, to unscrew or unbolt the tie rods and to disengage the space-capture rods.

It is the principal object of the invention to overcome this problem by providing a fuel bundle which can be completely reconstituted without access to the bottom plate. This object is achieved by the fuel bundle characterised in claim 1.

Accordingly, there is provided a fuel pundle having one or more tie rods each secured to the bottom plate by a key by means of which the tie rod can be locked to, and unlocked from, the bottom plate without direct access to the bottom plate. Each tie rod is also secured to the top plate by means for preventing rotation of the tie rod. Specifically, the tie rod has at the bottom a flat key which passes through a slot in the bottom plate. The tie rod can be locked to the bottom plate by turning the rod so that the key is at an angle to the slot under the bottom plate. At the top the tie rod has a flattened plug with a transverse cross-section resembling a race track. The plug has a thread on its rounded sides. A nut is threaded onto the thread on the plug and engages the top plate. The plug passes through a slot in the top plate. The nut has a crimping lip which is crimped to the plug. To disassemble the bundle the crimp for each tie rod is broken by turning the nut. The nut and top plate can then be removed and the tie rod turned to unlock the key and removed by access to the top of the bundle. The plug has a flat tip which may be engaged to prevent rotation of a tie rod when the crimp is broken and the nut unscrewed by turning the nut. Since the tie rods of this invention are not rotatable, they may carry the tabs which prevent displacement of the straps, and the spacer-capture rods may be dispensed with.

A preferred emtodiment of the invention will now be described, by way of example only, with reference to the accompanying drawings, in which:

Figure 1 is a fragmental isometric view of a fuel assembly including fuel bundles embodying the invention;

Fig. 2 is a view in side elevation, of some of the fuel bundles;

Fig. 3 is a fragmental enlarged view of the part of the fuel bundle of Fig. 2 in circle III;

Fig. 4 is a plan view of the bottom plate of the fuel bundle shown in Fig. 2;

Fig. 5 is a plan view of the top plate of the fuel bundle shown in Fig. 2;

Fig. 6 is a view in side elevation of a tie rod embodying the invention;

Fig. 7 is a bottom view of this tie rod taken in the direction VII of Fig. 6;

Fig. 8 is a plan view of the top of the tie rod taken in the direction VIII of Fig. 6;

Fig. 9 is a fragmental plan view of the portion of a bottom plate enlarged through which the key at the lower end of the tie rod penetrates;

Fig. 10 is a view in section taken along line X-X of Fig. 9;

Fig. 11 is a fragmental plan view showing the part of the top plate which is adapted to receive the upper end of a tie rod according to the invention;

Fig. 12 is a fragmental view in side elevation and partly in section taken in the direction XII of Fig. 11;

Fig. 13 is a plan view of the nut for locking the tie rod against rotation; and

Fig. 14 is a view in side elevation taken in the direction XIV of Fig. 13.

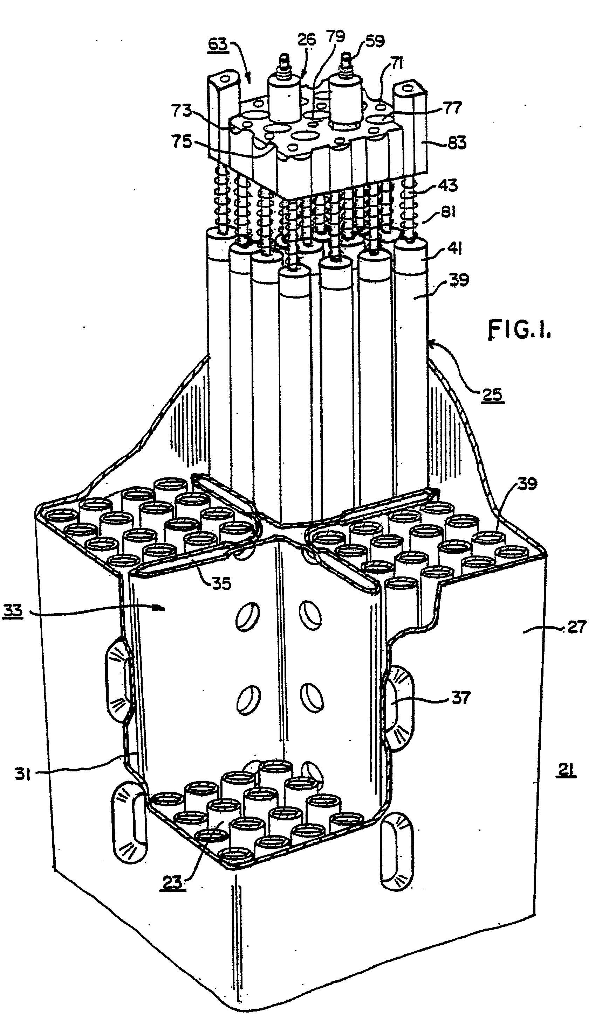

Fig. 1 shows a fuel assembly 21 including several fuel bundles 23 each including a plurality of conventional fuel rods 25 and one or more tie rods 26 embodying the invention. The fuel rods 25 and tie rods 26 are arranged in a square array typically of 16 rods (4x4). The bundles 23 are typically arranged in a square array (2x2) each defining a quadrant of the assembly. The bundle array is wrapped in a plate 27 of generally square cross-section defining a channel for coolant flow therethrough and consequently through the fuel rod bundles. The bundles 23 are spaced from each other, defining a cruciform gap 31 through which extends a coolant conductor 33 in the form of a cross with arms which are hollow and define channels 35 for coolant flow therethrough. The channels 35 are open only at the bottom and the top and coolant typically is conducted through the channels from the bottom toward the top. The plate 27 forming the outer or inner flow channel is secured to the coolant conductor 33 by being welded thereto at dimples 37 distributed axially along the plate and leaving spaces for fluid flow to exist between the quadrants of the square array of fuel bundles 23.

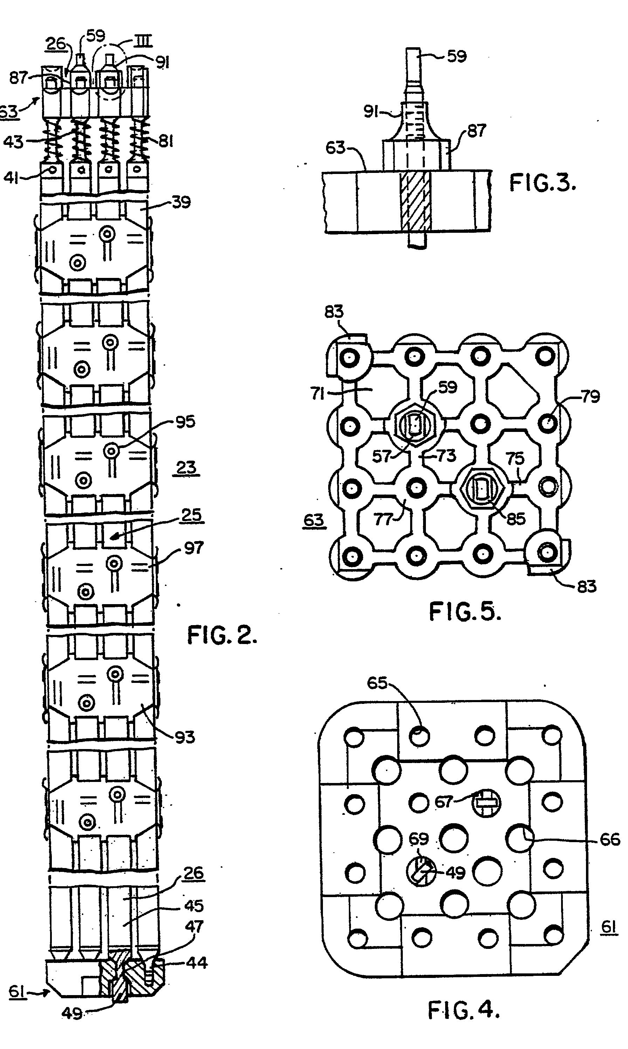

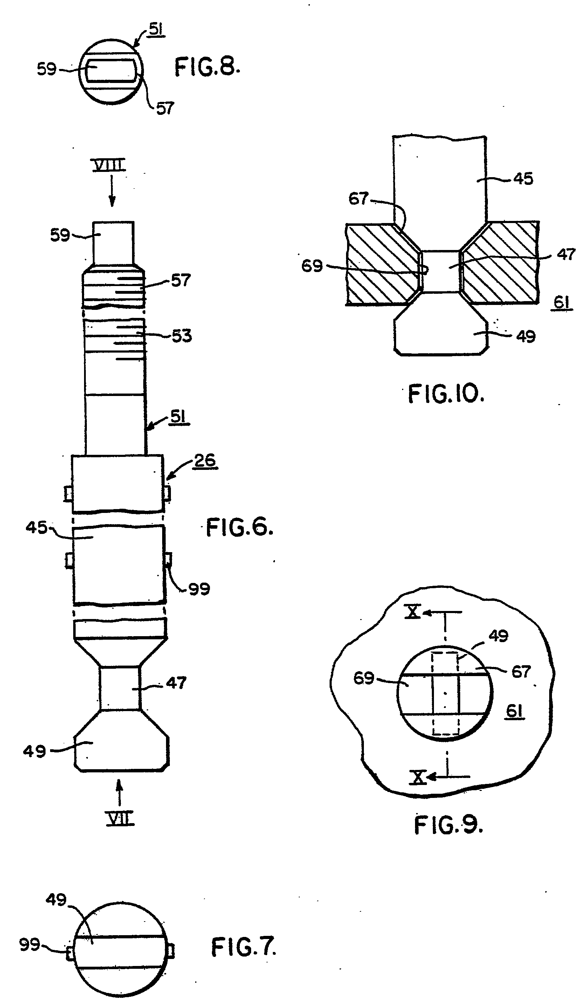

Each conventional fuel rod 25 includes a cylindrical cladding tube 39 containing nuclear fuel and including an end cap 41 from which a pin 43 extends (Figs. 1, 2). A tapered pin 44 also extends from the lower end of the cladding 39. Each tie rod 26 (Fig. 6) likewise includes a cylindrical cladding tube 45 which may or may not contain nuclear fuel. At its lower end, the tie rod 26 tapers into a stem 47 from which a flat key 49 extends. The key tapers from the stem 47 outwardly into a generally rectangular portion. At its upper end, the tube 45 has an elongate member 51. The elongate member 51 has a flat upper portion 53 with a transverse cross section having a boundary which resembles a race track with flat sides and rounded ends 57. The upper portion 53 is threaded along the rounded ends. From the end of the portion 53 there extends a flat tip 59.

Each fuel bundle 23 has a lower end plate 61 and an upper end plate plate 63 (Figs. 1, 2). The lower plate 61 is a generally rectangular block having holes 65 (Fig. 4) for receiving the tapered pins 44 extending from the conventional fuel rods 25 and holes 66 for passage of coolant. The plate 61 also has a plurality of holes 67 in each of which a slot 69 is interposed. The holes 67 are countersunk from the top and bottom as shown in Fig. 10. Each tie rod 26 is inserted in one of the holes 67 so that the key 49 passes through the slot 69, after which the tie rod is rotated about its longitudinal axis through an angle, such as 45° or 90°, causing the key 49 in cooperation with the lower surface of the end plate 61 to lock the tie rod to the lower plate against removal therefrom.

The upper plate 63 is a block in the form of a grid having generally octagonal openings 71 for upward coolant flow therethrough. The openings 71 are defined by intersecting members 73 and 75 structured to form, at their intersections, generally circular regions 77 with holes 79 extending concentrically therethrough. Certain (most) of these holes 79 are axially aligned with the holes 65 in the lower plate 61. Each conventional fuel rod 25 has its lower pin 44 (Fig. 2) engaged and seated in one of the holes 65 in the lower plate 61, and has the pin 43 in its upper cap 41 slideably extending through the aligned hole 79 in the upper plate 63. Each pin 43 is encircled by a coil spring 81 held under compression between the end cap 41 of the fuel rod and the upper plate 63. The upper plate 63 has diagonally disposed corner posts 83 (Figs. 1 and 5) which serve to align the fuel bundle in the upper nozzle (not shown) associated with the fuel bundle.

The upper plate 63 also has one or more openings 85 each of which is axially aligned with one of the slotted holes 67 in the lower plate 61 and has the form of a slot having the same race-track-like contour as the outer surface of the flat upper portion 53 of the plug 51 and thus forming a receptacle for the flat upper portion of the plug. Each hole 85 is so oriented that, with the associated tie rod 26 turned to have its key 49 in the locked position thereof, the upper portion 53 of the tie rod extends through the hole 85 and, hence, prevents turning of the tie rod.

In assembling the apparatus, the fuel rods are positioned with their pins 44 seated in the holes 65 of the lower plate 61, and the tie rods are inserted into the holes 67 and locked to the lower plate 61. The springs 81 are mounted on the rods 43. Similar springs may also be mounted on the lower portion of plug 51. Then the upper plate 63 is lowered into position, with the pins 43 of the various fuel rods 25 passing through the associated holes 79 in the upper plate, and with the portions 53 of the respective tie rods 26 passing through the associated openigs 85 in the upper plate 63.

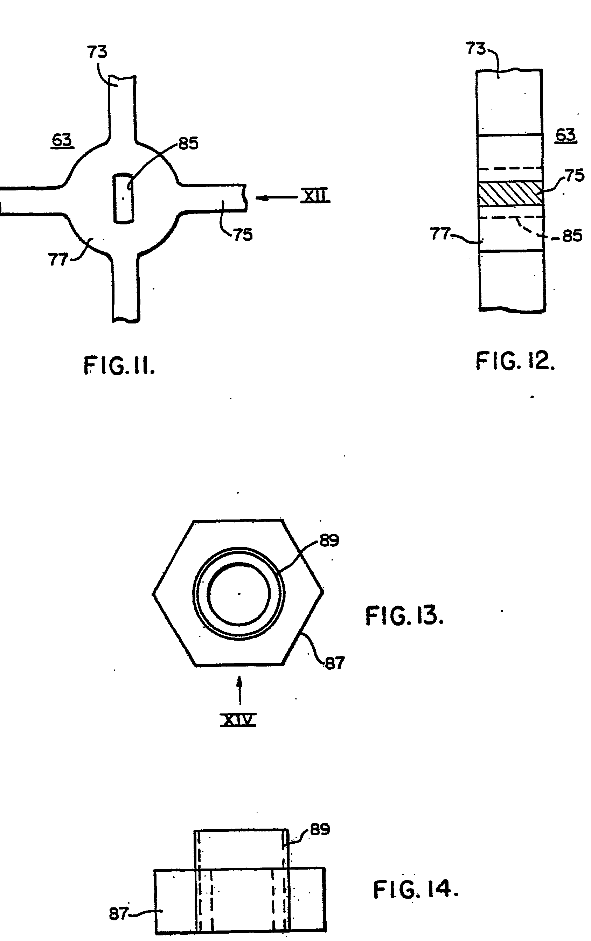

A nut 87 (Figs. 2, 3, 13, 14) is threaded onto the threaded flat portion 53 of the plug 51 of each tie rod 26 to limit upward movement of the upper plate 63 under the action of the springs 81. The nut 87 has a cylindrical crimp lip or sleeve 89 (Fig. 14) adapted, after the nut 87 is threaded onto portion 53 and is seated on the surface of upper plate 63, to be crimped onto the flat portion 53 as shown at 91 in Figs. 2, 3, thereby to positively secure the nut 87 against rotation thereof on and relative to the tie rods.

The fuel rods 25 of the fuel bundle 23 are secured together by grids 93 (Fig. 2) spaced along the length of the bundle. Each grid includes dimples 95 and leaf springs 97 in each cell (not shown) which springs exert a resilient force on one side of each cell urging the dimples on the opposite side into engagement with each fuel rod 25 passing through the cell. To prevent the grids 93 from sliding along the bundle 23 under the force exerted by the coolant, which usually flows in and out of the reactor at a velocity typically of 15 m/sec., tabs 99 (Fig. 6) are provided along the outer surface of each tie rod 26. Since the coolant flows upwardly in the normal operation of a reactor, it may be adequate to provide tabs 99 only above each grid 93 (six sets in the core of bundle shown in Fig. 2). However, typically tabs 99 are provided both above and below each grid 93. The tie rod 26 thus serves the additional purpose of the spacer-capture rods of the prior art and the spacer-capture rods may be dispensed with.

To disassemble a fuel bundle 23, the tip 59 of each tie rod 26 is held by a wrench which is usually remotely operated. The nut 87 is then turned by a second remotely operated wrench. The crimp 91 is broken and the nut 87 is removed. After the nuts 87 are removed from all tie rods 26, the upper plate 63 is removed. The tie rods 26 are turned to the unlocked position and the fuel bundle can be reconstituted as required.

## Claims

1. A fuel bundle (23) for use in a nuclear reactor, including a bottom plate (61), a top plate (63), a plurality of nuclear fuel rods (25), and at least one tie rod (26) extending between the bottom and top plates for interconnecting same, said tie rod including locking means movable, through partial rotation of the tie rod about its longitudinal axis, between an initial position for permitting the tie rod to be engaged with and disengaged from the bottom plate and a locking position for locking the tie rod to the bottom plate, and retaining means for securing the tie rod against inadvertent rotation thereof when the locking means is in its locking position, characterized in that said locking means comprises a key (49) which is disposed on the lower end of a stem (47) projecting axially from the lower end of the tie rod (26), and said retaining means comprises an elongate member (51) projecting axially from the upper end of the tie rod (26) and having a retaining portion (53) of non-circular cross-section, said bottom plate (61) having formed therein a receptacle (67, 69) including a slot (69) which extends through the bottom plate and has said stem (47) rotatably received therein, said slot having a shape permitting and preventing passage of said key (49) therethrough when the key is in said initial position and said locking position, respectively, and said top plate (63) having therethrough an opening (85) for receiving said retaining portion (53), said opening (85) having a cross-sectional configuration and orientation such as to receive said retaining portion (53), during assembly of the fuel bundle, only if said key (49) is in the locking position thereof, and to cooperate with said retaining portion, when received in said opening, to preclude rotational movement of the tie rod (26) about its longitudinal axis."

2. A fuel bundle according to claim 1, characterized in that said key (49) is a flat plate, said slot (69) through the bottom plate (61) being shaped, in cross-section, substantially as said flat plate and having a size sufficient to allow the latter to be inserted through said slot and positioned directly beneath said bottom plate (61)

3. A fuel bundle according to claim 1 or 2, characterized in that said retaining portion (53) of the elongate number (51) is substantially rectangular in cross-section, and said opening (85) in the upper plate (63) substantially conforms to said retaining portion (53) with respect to its cross-sectional size and configuration.

4. A fuel bundle according to claim 3, characterized in that said retaining portion (53) extends slideably through said opening (85) and projects from the upper plate (63), said retaining portion (53) having an external threading formed at least on the projecting part thereof and having a nut (87) disposed thereon and threadedly engaged therewith.

5. A fuel bundle according to claim 4, characterized in that said nut (87) includes a locking lip (89) which is crimped against the flat sides of the projecting part of said retaining portion (53) to secure the nut against rotation thereof relative to the tie rod (26).

6. A fuel bundle according to any one of the preceding claims, including rod-spacing grids spaced from each other in the longitudinal direction of the fuel and tie rods, characterized in that said tie rod (26) has tabs (99) disposed thereon and cooperating with the grids (93) to secure the latter against displacement thereof relative to and longitudinally of the tie rod.

## Patentansprüche

1. Brennstoffbündel (23) zum Einsatz in einem Kernreaktor, mit einer Bodenplatte (61), einer Kopfplatte (63), einer Mehrzahl von Kernbrennstäben (25) und mindestens einer zwischen Bodenplatte und Kopfplatte verlaufenden Verbindungsstange (26) zu deren Verbindung, wobei die Verbindungsstange Arretierungsmittel aufweist, die durch teilweise Drehung der Verbindungsstange um ihre Längsachse zwischen einer Anfangsstellung, welche das Einsetzen und Herausnehmen von der Bodenplatte ermöglicht, und einer Arretierungsposition zur Arretierung der Verbindungsstange in der Bodenplatte beweglich sind, und Sicherungsmittel zum Sichern der Verbindungsstange gegen unbeabsichtigte Drehung derselben aufweist, wenn die Arretierungsmittel sich in der Arretierungsstellung befinden, dadurch gekennzeichnet, daß die Arretierungsmittel einen Keil (49) aufweisen, der am unteren Ende eines Schaftes (47) angeordnet ist, der axial vom unteren Ende der Verbindungsstange (26) vorspringt, und die Sicherungsmittel ein längliches Bauteil (51) aufweisen, das axial vom oberen Ende der Verbindungsstange (26) vorspringt und einen Sicherungsteil (53) mit nichtkreisförmigem Querschnitt hat, daß weiter die Bodenplatte (61) eine darin gebildete Aufnahmeöffnung (67, 69) mit einem durch die Bodenplatte verlaufenden Schlitz (69) aufweist, in welcher der Schaft (47) drehbar aufgenommen wird, wobei der Schlitz eine solche Form hat, daß er in der genannten Anfangsstellung das Durchführen des Keils (49) ermöglicht und in der genannten Arretierungsstellung den Durchtritt des Keils verhindert, und daß die Kopfplatte (63) eine Durchgangsöffnung (85) zur Aufnahme des Sicherungsteils (53) aufweist, wobei die Öffnung (85) eine solche Querschnittsform und Orientierung hat, daß sie den Sicherungsteil (53) während des Zusammenbaus des Brennstoffbündels nur dann aufnehmen kann, wenn der Keil (49) sich in seiner Arretierungsstellung befindet, und dann mit dem Sicherungsteil im Sinne einer Verhinderung einer Drehung der Verbindungsstange (26) um ihre Längsachse zusammenwirkt.

2. Brennstoffbündel nach Anspruch 1, dadurch gekennzeichnet, daß der Keil (49) eine flache Platte ist und der Schlitz (69) durch die Bodenplatte (61) im Querschnitt entsprechend der flachen Platte geformt ist und eine ausreichende Größe hat, um die flache Platte durch den Schlitz hindurchführen und direkt unter der Bodenplatte (61) positionieren zu können.

3. Brennstoffbündel nach Anspruch 1 oder 2, dadurch gekennzeichnet, daß der Sicherungsteil (53) des länglichen Bauteils (51) im Querschnitt etwa rechteckig ist und die Öffnung (85) in der Kopfplatte (63) dem Sicherungsteil (53) bezüglich Querschnittsform und Größe etwa entspricht.

4. Brennstoffbündel nach Anspruch 3, dadurch gekennzeichnet, daß der Sicherungsteil (53) verschiebbar durch die Öffnung (85) hindurchragt und von der Kopfplatte (63) übersteht, und daß der Sicherungsteil (53) mindestens auf dem überstehenden Teil ein Außengewinde und eine darauf aufgeschraubte Mutter (87) aufweist.

5. Brennstoffbündel nach Anspruch 4, dadurch gekennzeichnet, daß die Mutter (87) eine Sicherungslippe (89) aufweist, die gegen die Flachseiten des vorstehenden Teils des Sicherungsteils (53) zur Drehsicherung der Mutter gegenüber der Verbindungsstange (26) gebogen ist.

6. Brennstoffbündel nach einem der vorhergehenden Ansprüche, mit Brennstabhaltegittern, die in Längsrichtung der Brennstäbe und der Verbindungsstange mit gegenseitigen Abständen angeordnet sind, dadurch gekennzeichnet, daß die Verbindungsstange (26) daran gebildete und mit den Haltegittern (93) zusammenwirkende Laschen (99) aufweist, um die Haltegitter gegen Längsverschiebung relativ zur Verbindungsstange zu sichern.

## Revendications

1. Faisceau combustible (23) destiné à être utilisé dans un réacteur nucléaire comprenant une plaque inférieure (61), une plaque supérieure (63), une pluralité de barres (25) de combustible nucléaire, et au moins une barre d'accouplement (26) s'étendant entre les plaques supérieure et inférieure pour relier entre elles ces dernières, ladite barre d'accouplement comprenant un moyen de blocage pouvant être déplacé, par rotation partielle de la barre d'accouplement autour de son axe longitudinal, entre une position initiale pour permettre à la barre d'accouplement de venir en prise avec la plaque inférieure et d'en être dégagée et une position de blocage pour bloquer la barre d'accouplement dans la plaque inférieure, et un moyen de retenue pour fixer la barre d'accouplement afin d'en empêcher une rotation intempestive lorsque le moyen de bocage se trouve dans sa position de blocage, caractérisé en ce que ledit moyen de blocage comprend une clavette (49) qui est disposée sur l'extrémité inférieure d'une tige (47) faisant saillie axialement de l'extrémité inférieure de la barre d'accouplement (26), et ledit moyen de retenue comprend un élément allongé (51) faisant saillie axialement de l'extrémité supérieure de la barre d'accouplement (26) et comportant une partie de retenue (53) de section droite non circulaire, ladite plaque inférieure (61) comportant un réceptacle (67, 69) qui y est formé et qui comprend une fente (69) qui s'étend à travers la plaque inférieure et dans laquelle est reçue de façon tournante ladite tige (47), ladite fente ayant une forme permettant et empêchant le passage de la clavette (49) à travers cette fente lorsque la clavette se trouve dans ladite position initiale et dans ladite position de blocage, respectivement, et la plaque supérieure (63) étant traversée par une ouverture (85) destinée à recevoir la partie de retenue (53), l'ouverture (85) ayant une configuration de section droite et une orientation telles qu'elle reçoit la partie de retenue (53), durant l'assemblage du faisceau combustible, uniquement si la clavette (49) se trouve dans sa position de blocage, et qu'elle coopère avec ladite partie de retenue, lorsque celle-ci est reçue dans ladite ouverture, pour empêcher un mouvement de rotation de la barre d'accouplement (26) autour de son axe longitudinal.

2. Faisceau combustible selon la revendication 1, caractérisé en ce que la clavette (49) est une plaque plate, la fente (69) à travers la plaque inférieure (61) étant profilée, en section droite, sensiblement comme ladite plaque plate et ayant des dimensions suffisantes pour permettre à cette dernière d'être insérée dans ladite fente et positionnée directement en dessous de la plaque inférieure (61).

3. Faisceau combustible selon la revendication 1 ou 2, caractérisé en ce que la partie de retenue (53) de l'élément allongé (51) est sensiblement rectangulaire en section droite et l'ouverture (85) de la plaque supérieure (63) épouse sensiblement la forme de la partie de retenue (53) en ce qui concerne ses dimensions et sa configuration de section droite.

4. Faisceau combustible selon la revendication 3, caractérise en ce que la partie de retenue (53) s'étend de façon coulissante à travers l'ouverture (85) et fait saillie de la plaque supérieure (63), la partie de retenue (53) comportant un filetage extérieur formé au moins sur sa partie saillante et comportant un écrou (87) disposé et vissé sur cette partie.

5. Faisceau combustible selon la revendication 4, caractérisé en ce que l'écrou (87) comprend une lèvre de blocage (89) qui est sertie contre les côtés plats de la partie saillante de la portion de retenue (53) pour immobiliser l'écrou afin qu'il ne tourne pas par rapport à la barre d'accouplement (26).

6. Faisceau combustible selon l'une quelconque des revendications précédentes, comprenant des grilles d'espacement de barre espacées les unes des autres dans la direction longitudinale des barres de combustible et des barres d'accouplement, caractérisé en ce que sur les barres d'accouplement (26) sont disposées des saillies (99) coopérant avec les grilles (93) pour immobiliser celles-ci afin qu'elles ne se déplacent pas par rapport à la barre d'accouplement et dans le sens longitudinal de cette dernière.

FIG.I.

FIG. 2.

FIG.3.

FIG.5.

FIG.4.

FIG.8.

FIG.10.

FIG.6.

FIG.9.

FIG.7.

FIG. II.

FIG. 12.

FIG. 13.

FIG. 14.